# EUROPÄISCHE PATENTSCHRIFT

(11) **EP 1 135 841 B1**
(45) Veröffentlichungstag und Bekanntmachung des Hinweises auf die Patenterteilung: **12.06.2002**
(21) Anmeldenummer: 99960840.9
(22) Anmeldetag: 29.10.1999
(51) Int. Cl.: H02K 1/18, H02K 11/04

(54) **ELEKTROMOTORISCHER ANTRIEB, INSBESONDERE FÜR EINE PUMPE FÜR EIN SERVO-LENKSYSTEM EINES KRAFTFAHRZEUGS**
ELECTROMOTIVE DRIVE, ESPECIALLY FOR THE PUMP OF A POWER-ASSISTED STEERING SYSTEM OF A MOTOR VEHICLE
COMMANDE ELECTROMOTRICE, NOTAMMENT POUR LA POMPE DU SYSTEME DE DIRECTION ASSISTE D'UNE AUTOMOBILE

(30) Priorität: 05.11.1998 DE 19851060
(43) Veröffentlichungstag der Anmeldung: 26.09.2001
(73) Patentinhaber: TRW Automotive Electronics & Components GmbH & Co. KG, 78315 Radolfzell (DE)
(72) Erfinder: PETER, Cornelius, D-77815 Bühl (DE); VON DER HEIDE, Johann, D-78713 Schramberg (DE); PETACH, Michael, Redondo Beach, CA 90277 (US)
(74) Vertreter: Eder, Thomas, Dr.-Ing.
(86) Internationale Anmeldenummer: DE9903472
(87) Internationale Veröffentlichungsnummer: WO0028641

(56) Entgegenhaltungen:
- GB-A- 2 293 695
- US-A- 5 376 850
- US-A- 5 694 268
- US-A- 5 747 908
- PATENT ABSTRACTS OF JAPAN vol. 1998, no. 05, 30. April 1998 (1998-04-30) -& JP 10 014187 A (SANKYO SEIKI MFG CO LTD), 16. Januar 1998 (1998-01-16)
- PATENT ABSTRACTS OF JAPAN vol. 017, no. 630 (E-1463), 22. November 1993 (1993-11-22) -& JP 05 199721 A (NIPPON SEIKO KK), 6. August 1993 (1993-08-06)

## Beschreibung

Die Erfindung betrifft einen elektromotorischen Antrieb, insbesondere für eine Pumpe für ein Servo-Lenksystem eines Kraftfahrzeugs, mit den Merkmalen des Oberbegriffs des Patentanspruchs 1.

Bei Servo-Lenksystemen werden in der Regel elektromotorisch angetriebene Pumpen verwendet, wobei die Motoren so ausgelegt sind, dass diese nur kurzzeitig bei Volllast betrieben werden. Insbesondere bei Volllast werden bei bekannten Motoren bzw. damit integriert ausgebildeten Pumpen für die Hydraulik des Servo-Lenksystems störende pfeifende Geräusche erzeugt, die offensichtlich auf relativ hochfrequente Drehmomentschwankungen zurückzuführen sind.

Bekannte elektromotorische Antriebe bzw. elektromotorische Pumpen weisen einen Elektromotor auf, welcher aus einem Stator und einem als Außenläufer realisierten Rotor besteht, welcher den Stator topfförmig umfasst. Der Stator sitzt auf einem diesen durchgreifenden Lagerschaft und ist mit diesem fest verbunden. Zusätzlich ist zur Übertragung des Drehmoments vom Stator auf das übrige Gehäuse zwischen Stator und dem Lagerschaft ein axialer Splint in einander gegenüberstehenden Nuten in der Innenwandung des Stators und der Außenwandung des Lagerschafts eingesetzt. An der Unterseite des Stators sind die Anschlusskontakte der Statorwicklungen mit einer zwischen Stator und dem Gehäuseboden angeordneten Platine verbunden, auf der die Steuerelektronik für den Motor bzw. die Pumpe vorgesehen ist.

Aus der GB-A-2 293 695 ist ein Reluktanzmotor bekannt, bei dem ein Stator im Inneren eines Gehäuses angeordnet ist und bei dem innerhalb des Stators der Rotor drehbar gehalten ist. Zwischen dem Stator und dem Gehäuse sind Vibrationen absorbierende Mittel, beispielsweise Fett oder O-Ringe, vorgesehen. Die Rotorwelle ist an beiden Enden des Gehäuses mittels jeweils eines Wälzlagers gelagert. Die Art der Montage des Motors und der elektrischen Kontaktierung der Motorwicklungen ist in der GB-A-2 293 685 nicht näher erläutert.

Des Weiteren ist aus der US-A-5 376 850 ein Spindelmotor für eine Plattenspeichevorrichtung bekannt, bei dem der Stator mittels dämpfenden O-Ringen auf einem Befestigungsteil bzw. auf einem feststehenden Stift befestigt ist. Der Stator sitzt mit seiner Unterseite auf einer Kunststoffscheibe, welche ihrerseits auf einer Stufe des Stifts gelagert ist. An seiner Oberseite ist der Stator mittels eines O-Rings und eines Einschnapprings gehalten. Der Stift selbst ist fest mit dem Gehäuse verbunden. Durch diese Maßnahmen werden Vibrationen, die beim Betrieb des Motors entstehen gedämpft.

Ausgehend von diesem Stand der Technik liegt der Erfindung die Aufgabe zugrunde, einen elektromotorischen Antrieb, insbesondere für eine Pumpe für ein Servo-Lenksystem eines Kraftfahrzeugs zu schaffen, bei dem eine verbesserte Unterdrückung der bei bekannten Antrieben auftretenden Störgeräusche gewährleistet ist.

Die Erfindung löst diese Aufgabe mit den Merkmalen des Anspruchs 1.

Die Erfindung geht von der Erkenntnis aus, dass die störenden Geräusche vermutlich durch das im Wesentlichen starr gekoppelte System Stator/Lagerschaft erzeugt werden, das einen Stimmgabeleffekt erzeugt, wenn die Resonanzfrequenz des Systems im Bereich der hochfrequenten Drehmomentschwankungen liegt, die bei Elektromotoren praktisch unvermeidlich sind und vor allem bei Volllast eine zu den störenden Geräuschen führende ausreichende Amplitude aufweisen.

Erfindungsgemäß wird daher die in Bezug auf die Drehmomentübertragung starre Kopplung zwischen dem Stator und dem Lagerschaft aufgehoben. Die Drehmomentübertragung erfolgt im Wesentlichen nur durch die Kopplung des Stators mit dem übrigen Gehäuse (abgesehen vom Lagerschaft). Der Lagerschaft dient nur zur Halterung des Stators in der zur Achse des Lagerschafts transversalen Ebene. In der Praxis hat sich bereits durch den Verzicht auf den die starre Kopplung bewirkenden Splint (oder vergleichbare Koppelmittel) eine deutliche Reduzierung der Störgeräusche ergeben.

Nach der Erfindung erfolgt die Drehmomentübertragung vom Stator auf das übrige Gehäuse über eine Trägerplatte, die als Stanzgitter ausgebildet ist. Der Stator ist dabei seinerseits auf der Trägerplatte montiert. Hierdurch ergibt sich zum einen eine sehr einfache Montage. Zum anderen können hochfrequente Drehmomentschwankungen durch die Flexibilität und Dämpfungseigenschaften der Trägerplatte bzw. des Systems Stator/Trägerplatt stark gedämpft werden. Schwingungen des gesamten Gehäuses und ggf. eine hierdurch erfolgende Anregung des Systems Rotor/Lagerschaft werden hierdurch reduziert bzw. unterdrückt.

Eine verbesserte Störgeräuschunterdrückung wird durch das Vorsehen eines Spalts zwischen der Innenwandung des Stators und der Außenwandung des Lagerschafts erreicht, wobei der Spalt vorzugsweise zumindest teilweise mit einem viskosen Medium gefüllt wird. Statt dessen oder zusätzlich können flexible, vorzugsweise schwingungsdämpfende Elemente, beispielsweise O-Ringe, zur Überbrückung des Spalts bzw. Kopplung von Stator und Lagerschaft vorgesehen sein. Die Kopplung darf aber nicht so ausgestaltet sein, dass eine wesentliche Drehmomentübertragung ermöglicht wird. Durch diese Maßnahmen wurde eine weiter verbesserte Geräuschunterdrückung erreicht. Obwohl die Wirkungsweise dieser Maßnahmen nicht bis ins Letzte geklärt ist, kann vermutet werden, dass durch die nicht drehmomentübertragende Kopplung von Stator und Lagerschaft die Resonanzeigenschaften (Resonanzfrequenz und Dämpfung) des Systems Rotor/Lagerschaft so verändert werden, dass kaum störende Geräusche erzeugt werden.

Um insbesondere bei einer schwachen Dimensionierung der Trägerplatte deren mechanische Überlastung zu vermeiden, können an der Trägerplatte Mittel zur kraft- und/oder formschlüssigen Drehmomentübertragung auf das übrige Gehäuse vorgesehen sein, beispielsweise in Form von Aufrauungen, Verzahnungen oder Riffelungen an der Unterseite der Trägerplatte, welche in Verbindung mit einem entsprechenden Anpressdruck der Platte an das Gehäuse eine verbesserte Kopplung zur Drehmomentübertragung bewirken. Derartige Aufrauungen, Verzahnungen oder Riffelungen können beispielsweise an nicht kunststoffumspritzten Leiterzügen eines die Trägerplatte realisierenden kunststoffumspritzten Stanzgitters vorgesehen sein. Dabei kann auf diese Weise gleichzeitig eine elektrische Kontaktierung des Gehäuses, beispielsweise mit Massepotential, erfolgen.

Weitere Ausführungsformen der Erfindung ergeben sich aus den Unteransprüchen.

Die Erfindung wird nachfolgend anhand eines in der Zeichnung dargestellten Ausführungsbeispiels näher erläutert. In der Zeichnung zeigen:
- Fig. 1: eine perspektivische Explosionsdarstellung der wesentlichen Komponenten einer elektromotorisch angetriebenen Pumpe mit einem Antrieb nach der Erfindung;
- Fig. 2: einen zentralen vertikalen Längsschnitt durch die Pumpe in Fig. 1 in fertig montiertem Zustand.

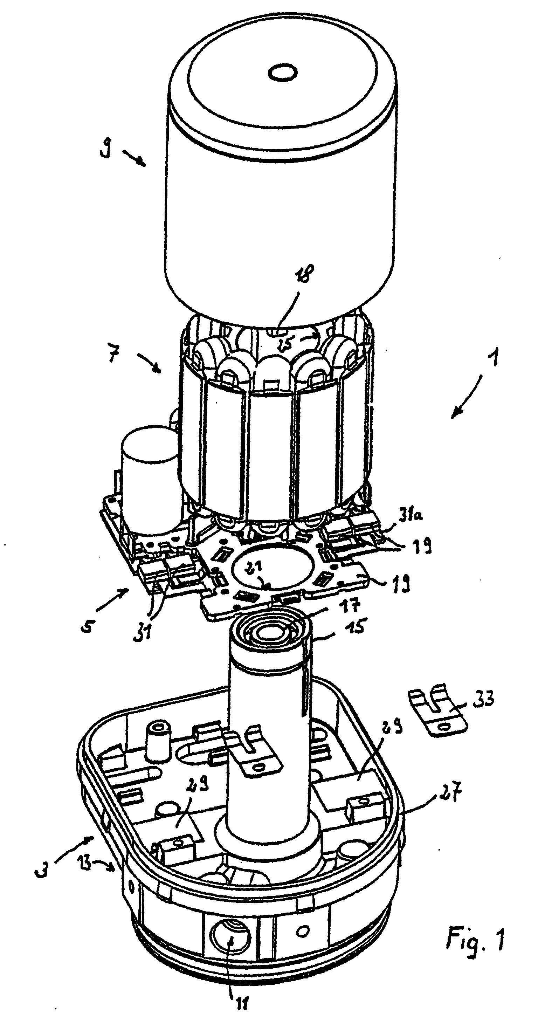

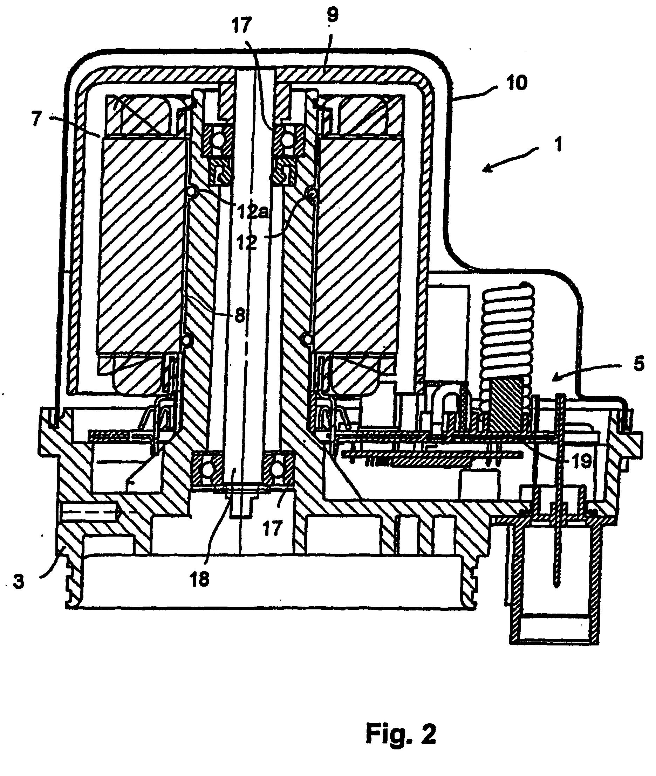

Fig. 1 zeigt eine elektromotorisch angetriebene Pumpe 1, die ein Gehäuse 3, eine Ansteuerelektronik 5 sowie einen aus einem Stator 7 und einem Rotor 9 bestehenden Elektromotor umfasst. Eine mit dem Gehäuse verbindbare Schutzkappe zur Abdeckung des Motors ist zusätzlich in Fig. 2 dargestellt. Selbstverständlich ist die Erfindung nicht auf das dargestellte Ausführungsbeispiel beschränkt, bei dem der erfindungsgemäße Antrieb integriert mit einer Pumpenmechanik ausgebildet ist. Vielmehr kann ein derartiger Antrieb auch für sich allein oder in Verbindung mit anderen anzutreibenden Geräten integriert realisiert werden.

Das Gehäuse 3 beinhaltet die gesamte Pumpenmechanik und weist in der vorderen Wandung eine Auslassöffnung 11 (Druckausgang) und in ihrer rückseitigen Wandung eine nicht näher dargestellte Ansaugöffnung 13 auf.

Ausgehend vom Boden des Gehäuses 3 erstreckt sich eine zylindrische Wandung oder Lagerschaft 15 nach oben, in welchem die mittels Lager 17 gelagerte Abtriebswelle 18 des Antriebs, die gleichzeitig als Antriebswelle für die Pumpenmechanik dient, vorgesehen ist.

Das Gehäuse 3 besteht vorzugsweise aus Aluminium- oder Magnesiumdruckguss.

Im Gehäuse 3 wird die Ansteuerelektronik 5 angeordnet, wobei diese eine Platine 19 umfasst, auf der die erforderlichen mechanischen, elektrischen, elektromechanischen und elektronischen Bauelemente vorgesehen sind. Die Platine 19 weist eine Ausnehmung 21 auf, in welche der Lagerschaft 15 des Gehäuses 3 eingreift. Die Platine 19 ist als Kombination eines umspritzten Stanzgitters (für hohe Stromstärken) und einer gedruckten Leiterplatte (für niedrige Stromstärken) ausgebildet.

Der Motor 7 weist einen Stator 7 mit der erforderlichen Anzahl von Statorwicklungen auf. Der Stator 7 weist ebenfalls eine axiale Ausnehmung 25 auf, mit welcher der Stator 23 auf den Lagerschaft 15 des Gehäuses 3 aufgesetzt wird. Der Stator 7 ist fest mit der Platine 19, insbesondere dem betreffenden Stanzgitter verbunden, beispielsweise durch Verlöten oder Verschweißen der Kontaktanschlüsse der Wicklungen mit den Leiterzügen des Stanzgitters.

Der Rotor 9 ist als Außenläufer aufgeführt und wird im Gehäuse 3 mittels der fest mit dem Rotor verbundenen Antriebswelle 18 und des Lagers17 rotierbar gelagert. Selbstverständlich wird der Rotor 9 mit der Antriebswelle 18 in geeigneter Weise verbunden.

Die gesamte Anordnung ist mittels einer in Fig. 2 dargestellten Schutzkappe abgedeckt, welche auf den Bund 27 der seitlichen Wandung des Gehäuses 3 aufgesetzt wird.

Im Gehäuse 3 sind zwei Auflageflächen 29 für Leistungshalbleiter 31 der Ansteuerelektronik 5 vorgesehen. Bei diesen Leistungshalbleitern kann es sich beispielsweise um Power-FET's handeln. Die Power-FET's weisen in üblicher Weise relativ kleine metallische Kühlkörper 31a auf, die in der Regel jedoch nicht eine ausreichende Abfuhr der Verlustwärme gewährleisten können.

Zu diesem Zweck werden die kleinen Kühlkörper 31 a auf den Auflageflächen 29 im Gehäuse 3 platziert und mit geeigneten Mitteln mit diesen in einen ausreichenden wärmeleitenden Kontakt gebracht.

Da die Kühlkörper 31a der Leistungshalbleiter 31 auch gleichzeitig die Funktion eines elektrischen Kontakts ausüben, kann erforderlichenfalls zwischen der Rückseite der kleinen Kühlkörper 31a und den Auflageflächen 29 eine elektrisch isolierende, jedoch ausreichend wärmeleitende Schicht vorgesehen sein. Gegebenenfalls kann jedoch auch ein unmittelbarer elektrischer Kontakt zwischen den Kühlkörpern 31a und dem Gehäuse 3 hergestellt werden, wenn dies elektrisch zulässig bzw. gewünscht sein sollte.

In der dargestellten Ausführungsform werden jeweils zwei Leistungshalbleiter 31 mittels federnder Klammern 33 auf den Auflageflächen 29 befestigt.

Die Bereiche des Gehäuses 3 unterhalb der Auflageflächen 29 weisen vorzugsweise einen oder mehrere Kanäle auf, die von dem von der Pumpe zu fördernden Medium durchflossen sind. Die betreffenden Bereiche wirken somit wie Wärmetauscher. Selbstverständlich können hierzu an sich bekannte Maßnahmen zur Verbesserung der Wärmeabfuhr von den Leistungshalbleitern 31 vorgesehen werden, wie beispielsweise das Vorsehen einer möglichst großen Fläche für das zu fördernde Medium in den Bereichen unterhalb der Auflageflächen 29. Beispielsweise können hierzu eine Vielzahl von Kanälen vorgesehen sein oder ein oder mehrere Kanäle innenseitige Kühlrippen aufweisen.

Um bei üblichen Antrieben in der Praxis auftretende Geräuschentwicklungen, verursacht durch relativ hochfrequente Schwankungen des erzeugten Drehmoments, zu vermeiden, wird erfindungsgemäß der Stator 7 nicht unmittelbar kraftschlüssig mit dem Lagerschaft 15 verbunden. Statt dessen sind der Lagerschaft 15 und der Stator 7 so dimensioniert, dass zwischen der Innenwandung des Stators und der Außenwandung des Lagerschafts ein Spalt 8 entsteht. Der bei bekannten Motoren vorgesehene axiale Splint zur kraft- und formschlüssigen Kopplung von Stator 7 und Lagerschaft 15, der in entsprechenden Nuten in der Innenwandung des Stators und der Außenwandung des Lagerschafts eingreift, entfällt bei der erfindungsgemäßen Konstruktion. Denn dieser würde eine starre Kopplung der Massen des Rotors mit der Masse des übrigen Antriebs erzeugen, wodurch die Resonanzfrequenz des Gesamtsystems Stator/Lagerschaft wieder in den Bereich der über den gesamten Betriebsbereich auftretenden hochfrequenten Drehmomentschwankungen fallen würde. Dieses System Stator/Lagerschaft würde dann wieder zu den störenden geräuscherzeugenden Schwingungen angeregt.

Um dennoch eine Führung bzw. ausreichende Halterung des Stators 7 zu erreichen, kann, wie in Fig. 2 dargestellt, in Nuten 12a in der Außenwandung des Lagerschafts 15 ein oder mehrere O-Ringe 12 vorgesehen sein. Diese O-Ringe 12 müssen ausreichend flexibel sein, damit keine unerwünschte starre Kopplung zwischen dem Stator 7 und dem Lagerschaft 15 entsteht. Damit dienen die O-Ringe mit ihrer Flexibilität und ihrer Dämpfungseigenschaft als schwingungsdämpfende Koppelelemente zwischen Stator und Lagerschaft.

Statt den O-Ringen 12 oder zusätzlich zu diesen kann der Spalt auch mit einem viskosen Medium, beispielsweise Fett, (teilweise) gefüllt sein. Hierdurch wird eine starre Kopplung ebenfalls vermieden bzw. weiter reduziert.

In jedem Fall muß eine im wesentlichen starre Kopplung zwischen Stator 7 und Lagerschaft 15 vermieden werden, die eine tangentiale Kraftübertragung bzw. die Übertragung des Drehmoments vom Stator auf den Lagerschaft nach sich ziehen würde.

Erfindungsgemäß wird das Drehmoment vom Stator 7 nicht über den Lagerschaft 15, sondern direkt auf das Gehäuse 3 bzw. den Gehäuseboden übertragen. Der Lagerschaft 15 dient, neben der Lagerung der Rotorwelle 18, nur zur axialen Führung bzw. Halterung des Stators.

Nach der in der Zeichnung dargestellten Ausführungsform der Erfindung ist der Stator 7 fest mit einer Trägerplatte, realisiert in Form der Platine 19, verbunden, Dies kann, wie vorstehend bereits erwähnt, durch das Verlöten oder Verschweißen von Anschlusskontakten des Stators mit den Leiterzügen des die Platine 19 darstellenden Stanzgitters erfolgen.

Da die Platine 19 zusammen mit dem darauf befestigten Stator 7 im Gehäuse 3 fest montiert wird, kann die Drehmomentübertragung vom Stator auf das Gehäuse über die Platine 19 erfolgen. Hierdurch wird zusätzlich erreicht, dass die Platine mit ihrer praktisch immer vorhandenen Flexibilität zur Dämpfung der hochfrequenten Schwankungen des zu übertragenden Drehmoments dient. Dies gilt insbesondere für die (zumindest teilweise) Ausbildung der Platine 19 als kunststoffumspritztes Stanzgitter.

Die schwingungsdämpfenden Eigenschaften der Platine 19 treten insbesondere dann zu Tage, wenn die Platine nicht vollflächig mit dem Gehäuse 3 starr verbunden ist, sondern nur in Teilbereichen bzw. punktuell, beispielsweise durch Verschrauben der Platine mit dem Gehäuse.

Um eine sichere Drehmomentübertragung zu gewährleisten und eine mechanische Überbeanspruchung bzw. Zerstörung der Platine zu vermeiden, muss diese entweder entsprechend dimensioniert werden oder es sind zusätzliche, die Drehmomentübertragung fördernde Maßnahmen zu ergreifen. Hierzu können, vorzugsweise im Befestigungsbereich des Stators auf der Platine auf dieser Mittel zur kraft- und/oder formschlüssigen Kopplung mit dem Gehäuse vorgesehen sein. Diese Mittel können beispielsweise in Form von Aufrauungen oder Verzahnungen an der Unterseite der Platine realisiert sein, welche bei gleichzeitig in diesen Bereichen wirkenden Anpresskräften eine verbesserte Drehmomentübertragung auf das Gehäuse gewährleisten. Diese Aufrauungen oder Verzahnungen können vorzugsweise an nicht kunststoffumspritzten Leiterzügen vorgesehen sein, die gleichzeitig zur elektrischen Kontaktierung des Gehäuses dienen können.

Selbstverständlich können zu diesem Zweck an der Unterseite der Platine auch sich nach unten erstreckende Fortsätze vorgesehen sein, die zur Drehmomentübertragung mit im Gehäuse vorgesehenen Anschlägen zusammenwirken.

Insgesamt werden durch die erfindungsgemäße Konstruktion störende geräuscherzeugende Schwingungen des Systems Stator/Lagerschaft dadurch vermieden, dass der Lagerschaft lediglich zur axialen und transversalen Halterung des Stators dient und die Übertragung des Drehmoments durch die drehfeste Montage des Stators im Gehäuse, vorzugsweise mittels einer Trägerplatte, gewährleistet wird.

## Patentansprüche

1. Elektromotorischer Antrieb, insbesondere für eine Pumpe für ein Servo-Lenksystem eines Kraftfahrzeugs,
a) mit einem Gehäuse (3), welches einen Lagerschaft (15) aufweist, in welchem die Welle (18) eines Rotors (9) drehbar gelagert ist, und
b) mit einem Antriebswicklungen aufweisenden Stator (7), welcher vom Lagerschaft (15) durchgriffen und von diesem gehalten ist,
c) wobei der Stator (7) durch den Lagerschaft (15) im Wesentlichen nur transversal gehalten und zur Drehmomentübertragung mit dem übrigen Gehäuse (3) drehfest verbunden ist,
**dadurch gekennzeichnet,**
d) dass der Stator (7) auf einer als Stanzgitter ausgebildeten Trägerplatte (19) angeordnet ist und dass die Drehmomentübertragung vom Stator (7) auf das Motorgehäuse (3) über die im Gehäuse befestigte Trägerplatte erfolgt.

2. Antrieb nach Anspruch 1, **dadurch gekennzeichnet, dass** zwischen der oder den Innenwandungen des Stators (7) und der Außenwandung des Lagerschafts (15) ein Spalt (8) vorgesehen ist.

3. Antrieb nach Anspruch 2, **dadurch gekennzeichnet, dass** der Spalt (8) mit einem viskosen Medium, vorzugsweise Fett, gefüllt ist.

4. Antrieb nach Anspruch 2 oder 3, **dadurch gekennzeichnet, dass** der Stator (7) mit dem Lagerschaft (15) mittels den Spalt (8) überbrückender flexibler, vorzugsweise schwingungsdämpfender Elemente (12) gekoppelt ist.

5. Antrieb nach Anspruch 4, **dadurch gekennzeichnet, dass** die flexiblen Elemente (12) O-Ringe sind, welche in Nuten (12a) in der Außenwandung des Lagerschafts (15) gehalten sind.

6. Antrieb nach einem der vorhergehenden Ansprüche, **dadurch gekennzeichnet, dass** an der Unterseite der Trägerplatte (19) Mittel zur kraftschlüssigen und/oder formschlüssigen Kopplung der Trägerplatte mit dem Motorgehäuse (3) in Bezug auf die Drehmomentübertragung vorgesehen sind.

7. Antrieb nach Anspruch 6, **dadurch gekennzeichnet, dass** die Mittel Aufrauungen, Verzahnungen oder Riffelungen umfassen und dass die kraftschlüssige Kopplung durch einen Anpressdruck der Trägerplatte (19) auf eine Montagefläche des Motorgehäuses (3) erzeugt wird.

8. Antrieb nach Anspruch 6 oder 7, **dadurch gekennzeichnet, dass** die Trägerplatte (19) als kunststoffumspritzes Stanzgitter ausgebildet ist und dass die Mittel zur kraftschlüssigen und/oder formschlüssigen Kopplung der Trägerplatte mit dem Motorgehäuse (3) in nicht umspritzten Bereichen eines oder mehrerer Leiterzüge des Stanzgitters vorgesehen sind.

9. Antrieb nach Anspruch 8, **dadurch gekennzeichnet, dass** die Mittel zur kraftschlüssigen und/oder formschlüssigen Kopplung der Trägerplatte (19) mit dem Motorgehäuse (3) gleichzeitig zur Kontaktierung des Motorgehäuses, beispielsweise mit Massepotential, dienen.

## Claims

1. Electromotive drive, in particular for a pump for a power-assisted steering system of a motor vehicle,
a) with a housing (3) having a bearing shank (15), in which the shaft (18) of a rotor (9) is mounted rotatably, and
b) with a stator (7) which has drive windings and through which the bearing shank (15) passes and which is held by the latter,
c) the stator (7) being held essentially only transversely by the bearing shank (15) and being connected fixedly in terms of rotation to the remaining housing (3) for torque transmission,
**characterized**
d) in that the stator (7) is arranged on a carrier plate (19) produced as a punched grid, and in that torque transmission from the stator (7) to the motor housing (3) takes place via the carrier plate fastened in the housing.

2. Drive according to Claim 1, **characterized in that** a gap (8) is provided between the inner walls of the stator (7) and the outer wall of the bearing shank (15).

3. Drive according to Claim 2, **characterized in that** the gap (8) is filled with a viscous medium, preferably grease.

4. Drive according to Claim 2 or 3, **characterized in that** the stator (7) is coupled to the bearing shank (15) by means of flexible, preferably vibration-damping elements (12) bridging the gap (8).

5. Drive according to Claim 4, **characterized in that** the flexible elements (12) are O-rings which are held in slots (12a) in the outer wall of the bearing shank (15).

6. Drive according to one of the preceding claims, **characterized in that** means for the non-positive and/or positive coupling of the carrier plate (19) to the motor housing (3) in respect of torque transmission are provided on the underside of the carrier plate.

7. Drive according to Claim 6, **characterized in that** the means comprise roughenings, serrations or knurlings, and **in that** non-positive coupling is produced by means of a pressure force for the carrier plate (19) on a mounting surface of the motor housing (3).

8. Drive according to Claim 6 or 7, **characterized in that** the carrier plate (19) is produced as a plastic injection-coated punched grid, and **in that** the means for the non-positive and/or positive coupling of the carrier plate to the motor housing (3) are provided in non-injection-coated regions of one or more conductor runs of the punched grid.

9. Drive according to Claim 8, **characterized in that** the means for the non-positive and/or positive coupling of the carrier plate (19) to the motor housing (3) serve at the same time for contacting the motor housing, for example with earth potential.

## Revendications

1. Entraînement par moteur électrique, en particulier pour une pompe pour un système de direction assistée dans un véhicule automobile, comprenant :
a) un boîtier (3), qui comporte un arbre-palier (15) dans lequel l'axe (18) d'un rotor (9) est monté en rotation, et
b) un stator (7) comportant des enroulements moteurs, ledit stator étant traversé et maintenu par l'arbre-palier (15),
c) de sorte que le stator (7) est maintenu essentiellement uniquement transversalement par l'arbre-palier (15) et est relié solidairement en rotation au reste du boîtier (3) pour la transmission de couples de rotation,
**caractérisé en ce que** :
d) le stator (7) est agencé sur une plaque de support (19) réalisée sous la forme d'une grille estampée, et **en ce que** la transmission d'un couple de rotation depuis le stator (7) vers le boîtier (3) du moteur a lieu via la plaque de support fixée dans le boîtier.

2. Entraînement selon la revendication 1, **caractérisé en ce qu'**il est prévu un intervalle (8) entre la ou les paroi(s) intérieure(s) du stator (7) et la paroi extérieure de l'arbre-palier (15).

3. Entraînement selon la revendication 2, **caractérisé en ce que** l'intervalle (8) est rempli d'un milieu visqueux, de préférence de la graisse.

4. Entraînement selon l'une ou l'autre dès revendications 2 et 3, **caractérisé en ce que** le stator (7) est accouplé à l'arbre-palier (15) au moyen d'éléments (12) flexibles qui coiffent l'intervalle (8), de préférence des éléments amortissant les oscillations.

5. Entraînement selon la revendication 4, **caractérisé en ce que** les éléments flexibles (12) sont des bagues toriques qui sont maintenues dans des gorges (12a) dans la paroi extérieure de l'arbre-palier (15).

6. Entraînement selon l'une des revendications précédentes, **caractérisé en ce qu'**à la face inférieure de la plaque de support (19) sont prévus des moyens pour le couplage à coopération de forces et/ou à coopération de formes de la plaque de support avec le boîtier (3) du moteur vis-à-vis de la transmission de couples de rotation.

7. Entraînement selon la revendication 6, **caractérisé en ce que** lesdits moyens comprennent des rugosités, des dentures, ou des cannelures, et **en ce que** le couplage à coopération de forces est produit par une pression d'application de la plaque de support (19) sur une surface de montage du boîtier (3) du moteur.

8. Entraînement selon l'une ou l'autre des revendications 6 et ses, **caractérisé en ce que** la plaque de support (19) est réalisée sous la forme d'une grille estampée revêtue par injection de matière plastique, et **en ce que** les moyens pour le couplage à coopération de forces et/ou à coopération de formes de la plaque de support avec le boîtier (3) du moteur sont prévus dans des zones non revêtues par injection d'une ou plusieurs rangées de barreaux de la grille estampée.

9. Entraînement selon la revendication 8, **caractérisé en ce que** les moyens pour le couplage à coopération de forces et/ou à coopération de formes de la plaque de support (19) avec le boîtier (3) du moteur servent simultanément à la mise en contact du boîtier du moteur, par exemple avec un potentiel de masse.
